(19) Europäisches Patentamt

European Patent Office

Office européen des brevets

(11) **EP 2 221 680 B1**

(12) **EUROPEAN PATENT SPECIFICATION**

(45) Date of publication and mention
of the grant of the patent:
**04.04.2012  Bulletin 2012/14**

(51) Int Cl.:
**G05B 13/04** $^{(2006.01)}$     **G05B 17/02** $^{(2006.01)}$

(21) Application number: **10152571.5**

(22) Date of filing: **03.02.2010**

(54) **Configurable multivariable control system**

Konfigurierbares mehrfach variables Steuersystem

Système de commande multivariable configurable

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **05.02.2009  US 366468**

(43) Date of publication of application:
**25.08.2010  Bulletin 2010/34**

(73) Proprietors:
• **ABB Ltd.**
  **Tallaght, Dublin 24 (IE)**
• **ABB Automation GmbH**
  **68309 Mannheim (DE)**

(72) Inventors:
• **Chen, Shin-Chin**
  **Dublin, OH 43017 (US)**
• **Berggren, Jonas**
  **17149, Solna (SE)**
• **Zehnpfund, Andreas**
  **60487, Frankfurt am Main (DE)**

(74) Representative: **De Santis, Giovanni**
  **ABB S.p.A.**
  **Via L. Lama, 33**
  **20099 Sesto San Giovanni (MI) (IT)**

(56) References cited:
  **GB-A- 2 432 682       US-A1- 2005 137 721**
  **US-A1- 2007 260 335    US-B1- 6 587 108**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

BACKGROUND OF THE INVENTION

The present invention relates in general to multivariable control systems and, more particularly, to improved multivariable control systems for industrial processes.

A multivariable control system is often used to control an industrial process with multiple input and multiple output variables, also known as a "multivariable process". Patent application GB2432682 discloses a control system for a process, wherein input variables are selected as best responsive to output variables. Output variables are generated using the selected subset of input variables for controlling the process. Ideally, a multivariable control system will always have all input and output variables available from the multivariable process for closing the control loop of the multivariable control system. In practice, some inputs and outputs of the process may not always be available or needed, depending on the status of instrumentation, the operating conditions of the multivariable process, and/or different products it produces. Therefore, there is a real need to make the multivariable control system dynamically configurable during its operation. The present invention is directed to a method and system that allow users to dynamically add, remove, separate or combine input and output variables in one or more multivariable sub-control systems where each sub-control system is associated with a different control objective, control constraints, or control tunings.

SUMMARY OF THE INVENTION

In accordance with the present invention, a method is provided for creating a control system for an industrial multivariable process with one or more manipulated variables and one or more controlled variables. The method comprises displaying a first table wherein one or more of the manipulated variables are selectively assignable to a plurality of sub-control systems, each manipulated variable being assignable to no more than one sub-control system. The method comprises displaying a second table in the user interface device, wherein one or more of the controlled variables are selectively assignable to the plurality of sub-control systems. The method comprises receiving assignments of one or more of the manipulated variables to one or more sub-control systems of the plurality of sub-control systems and one or more of the controlled variables to one or more sub-control systems of the plurality of sub-control systems, the assignments being received through the user interface device. The method comprises using the received assignments to generate one or more sub-process response models, and using the one or more sub-process response models to generate the one or more sub-control systems, which are operable to control one or more sub-processes, each sub-control system including a set of tuning parameters.

Also provided in accordance with the present invention is a computer system which performs the foregoing method.

BRIEF DESCRIPTION OF THE DRAWINGS

The features, aspects, and advantages of the present invention will become better understood with regard to the following description, appended claims, and accompanying drawings where:

Fig. 1 shows a schematic view of a paper making machine as an example of a multivariable process;

Fig. 2 shows a block-diagram view of the paper making machine;

Fig. 3 shows the first example of separating the paper making machine into two sub-processes;

Fig. 4 shows the second example of separating the paper making machine into three sub-processes;

Fig. 5 shows the third example of separating the paper making machine into two sub-processes;

Fig. 6 shows a block-diagram of a multivariable control system for the full process;

Fig. 7 shows sub-control systems for the sub-processes of Fig. 3;

Fig. 8 shows sub-control systems for the sub-processes of Fig. 4;

Fig. 9 shows sub-control systems for the sub-processes of Fig. 5;

Fig. 10 shows a configuration table wherein variables have been selected for the multivariable control system of Fig. 6;

Fig. 11 shows the configuration table wherein variables have been selected for the sub-control systems of Fig. 7;

Fig. 12 shows the configuration table wherein variables have been selected for the sub-control systems of Fig. 8; and

Fig. 13 shows the configuration table wherein variables have been selected for the sub-control systems of Fig. 9.

DETAILED DESCRIPTION OF ILLUSTRATIVE EMBODIMENTS

It should be noted that in order to clearly and concisely disclose the present invention, the drawings may not necessarily be to scale and certain features of the invention may be shown in somewhat schematic form. It should also be noted that, as used herein, the terms "sub-control system" and "subsystem" have the same meaning and are used interchangeably.

While the present invention is generally applicable to many complex industrial machines, it is useful to illustrate the present invention in the context of a sheet-forming application. Accordingly, the invention will be described herein with reference to a paper-making machine.

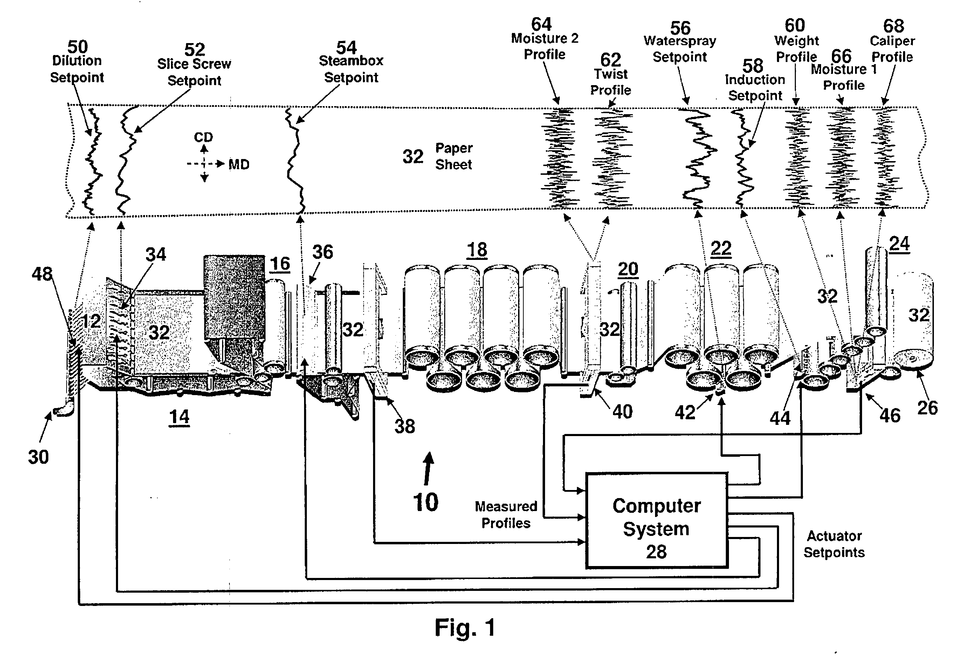

Referring now to Fig. 1, there is shown a paper making machine 10 that generally includes a stock approaching system 30, a headbox 12, a wire section 14, a press section 16, first and second dryer sections 18, 22, a sizing section 20, a calendar stack 24 and a roll-up spool 26. The paper making machine 10 makes a paper sheet by receiving furnished materials (including wood fibers and chemicals) that are diluted in water (the mixture being called "stock") through an in-flow 30, passing the stock through the headbox 12, dispersing the stock on the wire section 14, draining water to form a wet sheet 32, squeezing more water out at the press section16, evaporating the remaining water at the dryer sections 18 and 22, treating the surface of the sheet 32 at the sizing section 20 and the calender stack 24 before rolling the sheet 32 on to the roll-up spool 26. The calender stack 24 also alters sheet thickness.

A computer system 28 is provided for use with the paper making machine 10. The computer system 28 includes a Quality Control System (QCS) for monitoring and controlling the paper making machine 10. The QCS comprises one or more controllers and one or more computers. The computer system 28 may further include one or more other computers for performing off-line tasks related to the paper making machine 10 and/or the QCS. At least one of the computers of the computer system 28 has user interface devices (UI) that includes one or more display devices, such as a monitor (with or without a touch screen) or a hand-held devices such as a cell phone for displaying graphics, and one or more entry devices, such as a keyboard, a mouse, a track ball, a joystick, a hand-held and/or voice-activated devices.

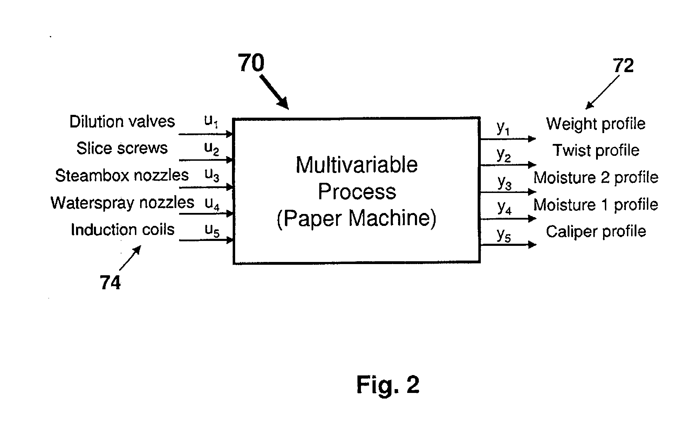

Referring to Fig.1, the stock feeding to the headbox 12 can be diluted by an array of dilution valves 48 which is known as "dilution profiler" for adjusting the stock consistency across the web and in turn changing cross-machine direction (CD) weight distribution. The desired valve opening for each zone forms an array called "setpoint" 50 for dilution profile. At the output side of the headbox 12 there is a narrow opening, also known as "slice opening", that disperses the furnished flow on the wire to form the paper sheet 32. The slice opening is adjusted by an array of slice screws 34 extending across the sheet width. The position settings of the slice screws 34 change the opening gap of the headbox 12 and influence the distribution and the uniformity of sheet weight, moisture content, fiber orientation, and sheet thickness in the CD direction. The slice screws 34 are often controlled by CD actuators attached to the slice screws 34. The position of each slice screw 34 is controlled by setting a target position, also known as a "setpoint" 52 for the corresponding CD actuator zone. Near the end of the wire section 14 or in the press section 16, one or multiple arrays of steam nozzles 36 that extend across the sheet web are often installed in order to heat the water content in the sheet 32 and allow the moisture content of the sheet 32 to be adjusted. The amount of steam that goes through the nozzles 36 is regulated by the target or setpoint 54 selected for each nozzle 36. Further downstream in dryer sections 18 or 22, one or multiple arrays of water spray nozzles 42 that extend across the web are often installed in order to spray misty water drops on the sheet 32 to achieve uniform moisture profile. The amount of water sprayed on the paper sheet is regulated by the target or setpoint 56 selected for each spray nozzle 42. Near the end of paper machine 10, one or multiple sets of induction heating zones 44 that extend across the web can also be installed in order to alter sheet glossiness and sheet thickness. The amount of heat applied by the different induction heating zones 44 is regulated by the target or setpoint 58 selected for each induction heating zone 44. The influence of multiple sets of CD actuators (including those described above) can be seen on multiple sheet properties that are measured by sensors in one or multiple frames 38, 40, and/or 46. Usually, each frame has one or multiple sensors, each of which measures a different sheet property. For example, the frames 40 and 46 in Fig. 1 may have weight, moisture, caliper and fiber orientation sensors which measure weight, moisture 1, moisture 2, caliper, and fiber angle profiles, respectively. The fiber angle profiles are further used to generate a twist profile. It is clear that a paper-making process is a multivariable process having multiple input variables and multiple output variables. The multivariable nature of a paper making machine in Fig. 1 can be simply expressed by a block-diagram as shown in Fig. 2. For this example, the multiple inputs to the paper making process 70 are setpoint arrays 50, 52, 54, 56, and 58, for dilution profiler, slice screws, steambox, waterspray, and induction profiler, respectively and the output from the paper making process are profiles 60, 62, 64, 66, and 68, for weight, twist, moisture 2, moisture 1, and caliper profiles, respectively. The input variable to a process is also known as "manipulated variable (MV)" and the output variable from a process is also called "controlled variable (CV)".

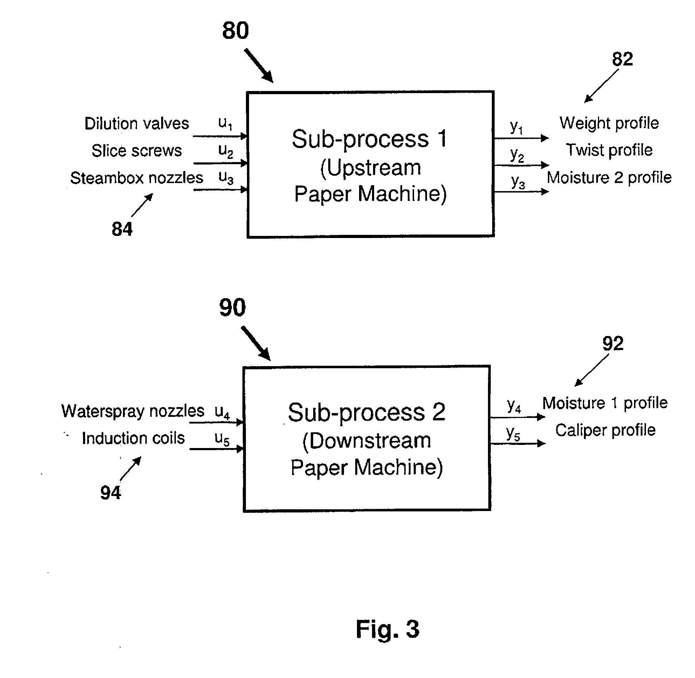

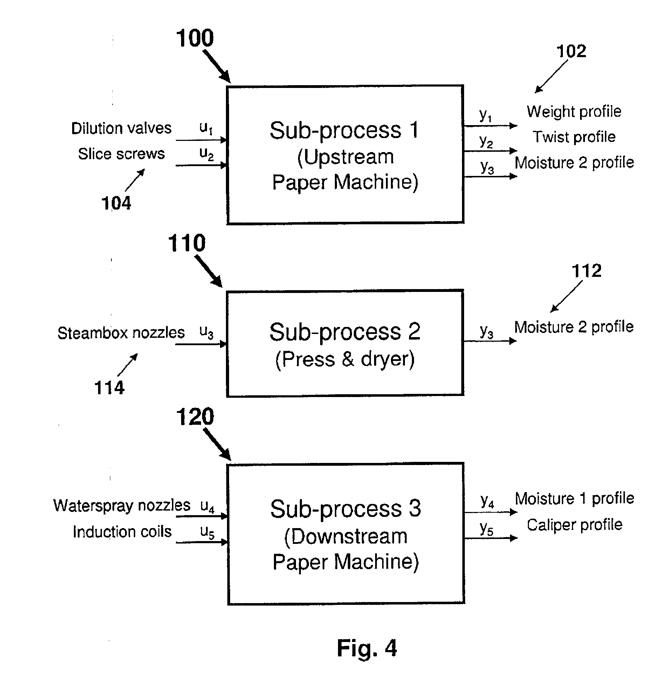

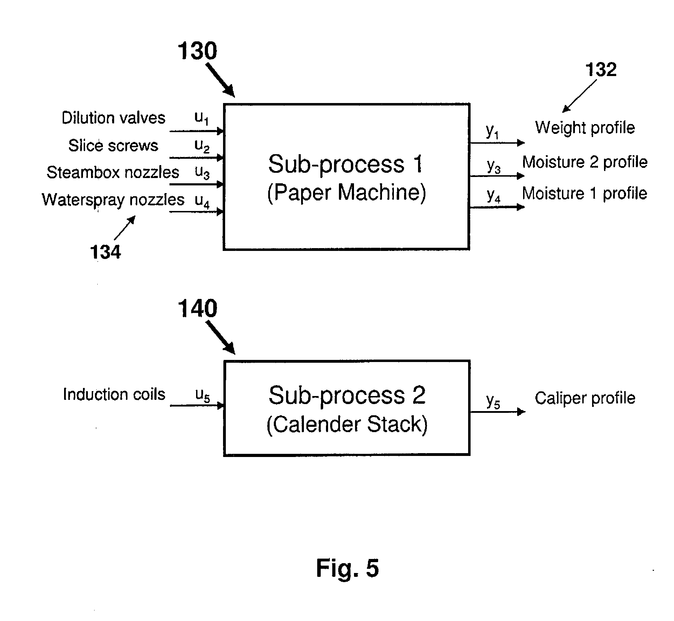

In practice, some manipulated variables and controlled variables of the process may not always be available or needed, depending on the status of instrumentation, the operating conditions of the multivariable process, and/or different products it produces. Under some conditions, a multivariable process may need to be divided into multiple sub-processes. Each sub-process is controlled independently. For other conditions, multiple sub-processes may need to be combined together in order to simultaneously consider the cross coupling impacts among variables. Figures 3-5 illustrate the examples of dividing a large multivariable process into sub-processes of multiple configurations. Referring to Figs. 2 and 3, the multivariable process 70 of a paper making process as indicated in Fig. 2 is divided into two sub-processes 80 and 90 in Fig. 3. The full multivariable process 70 has five manipulated variables 74 and five controlled variables 72. The sub-process 1 of Fig. 3 has three manipulated variables 84 and three controlled variables 82, Similarly, the sub-process 2 has two manipulated variables 94 and two controlled variables 92. The sub-process 1 actually represents the upstream part of the paper making machine and the sub-process 2 represents the downstream part of the paper making machine. The sub-processes of a multivariable process do not have to be totally independent or decoupled. Referring to Fig. 4, the full multivariable process 70 in Fig. 2 is divided into three sub-processes 100, 110, and 120. The sub-process 100 has two manipulated variables 104 and three controlled variables 102. The sub-process 110 has one manipulated 114 and one controlled variable 112. In this example, the controlled variable 112 of the sub-process 110 is the same as one of the controlled variables 102 of the sub-process 100. Inversely, some controlled variables may be dismissed completely as shown in Fig. 5 where the full multivariable process is divided into two sub-processes 130 and 140 but the controlled variable, twist profile ($y_2$) is not in either sub-process. The sub-process 130 has four manipulated variables 134 and three controlled variables 132. A multivariable process is also know as "square" if it has same number of manipulated and controlled variable. Otherwise, it is "rectangular". In a general case, a multivariable process or sub-process can be either square or rectangular. The sub-processes 100 and 130 are both rectangular.

Referring to Figs. 4 and 5, the sub-processes 110 and 140 have one manipulated and one controlled variables. Strictly speaking, they are not multivariable processes. However, they are legitimate sub-processes from a multivariable process and can be considered as a special case of a multivariable process. On the other hand, a full multivariable process can also be considered as a sub-process of itself. In a similar manner, a full multivariable control system can be considered as a sub-control system of itself. Thus, each sub-process illustrated in Figs. 2 to 5 is a legitimate subdivision of a multivariable process. For illustration purposes, each example of a subdivision of a multivariable process is called a "sub-process" of the full process. For convenience, a full process itself (without any subdivision) is called "configuration 0" such as the one shown on Fig. 2, The examples of Figures 3, 4 and 5 are called "configurations 1, 2, and 3" respectively. For a process with five inputs and five outputs, theoretically, there are $(2^5-1) \times (2^5-1) = 961$ possible sub-processes. However, for a practical application, typically only a handful of sub-processes of a multivariable process actually makes sense and needs to be considered.

A multivariable control system (such as implemented by the computer system 28) that controls a multivariable process (such as the process performed by the paper making machine 10 shown in Fig. 1) typically needs a response model $G(z)$ that relates the manipulated $u(z)$, disturbance $d(z)$, and controlled $y(z)$ variables of the process. The response model is used for predicting the future controlled variable $\tilde{y}(z)$ based on the past and future control actions and the current process measurements. A set of optimal control actions for manipulated variables is derived for reducing the deviation between the target $r(z)$ and the predicted $\tilde{y}(z)$ controlled variables. The relationship among those variables is illustrated by the following mathematical expression:

$$y(z) = G(z)u(z) + d(z)$$

$$G(z) = \begin{bmatrix} G_{11}(z) & G_{12}(z) & \cdots & G_{1n}(z) \\ G_{21}(z) & G_{22}(z) & \cdots & G_{2n}(z) \\ \cdots & \cdots & \cdots & \cdots \\ G_{m1}(z) & G_{m2}(z) & \cdots & G_{mn}(z) \end{bmatrix}$$

where $G(z)$ is a $mxn$ response model,
$y(z)=[y_1(z)\ y_2(z)\ \cdots\ y_m(z)]^T$,
$u(z) = [u_1(z)\ u_2(z)\ ...\ u_n(z)]^T$,
$d(z) = [d_1(z)\ d_2(z)\ ...\ d_m(z)]^T$
$z$ is a discrete transformation (z-domain) variable;
$n$ is the number of manipulated variables; and
$m$ is number of controlled variables.

Referring to the paper machine 10 shown in Fig.1, the manipulated variables $u(z)$ of the paper machine 10 may include the setpoint arrays to dilution profiler valves 48, slice screw actuators 34, steambox nozzles 36, water spray nozzles 42, induction profiler coils 44, and other similar devices. The controlled variables $y(z)$ may be the collection of sheet property profiles such as weight, twist, moisture, caliper, gloss, fiber orientation and other relevant measurements from one or multiple frames 38, 40, and 46. The disturbance $d(z)$ could be influences from uncontrollable factors such as the flow turbulences in a headbox, dewatering variations on the Fourdrinier wire, variations of felt absorption, drying variations of each dryer cylinder, and other similar variations that cannot be easily modeled. Considering a large number of zones of multiple actuator sets and the high resolution of multiple profiles, the dimensions of manipulated and controlled variables may vary broadly. Depending on the need of an application, if either manipulated or controlled variables can be divided into smaller sub-groups, then the dimension of each sub-group is smaller and the multivariable sub-process can be more efficiently controlled with a smaller multivariable control system.

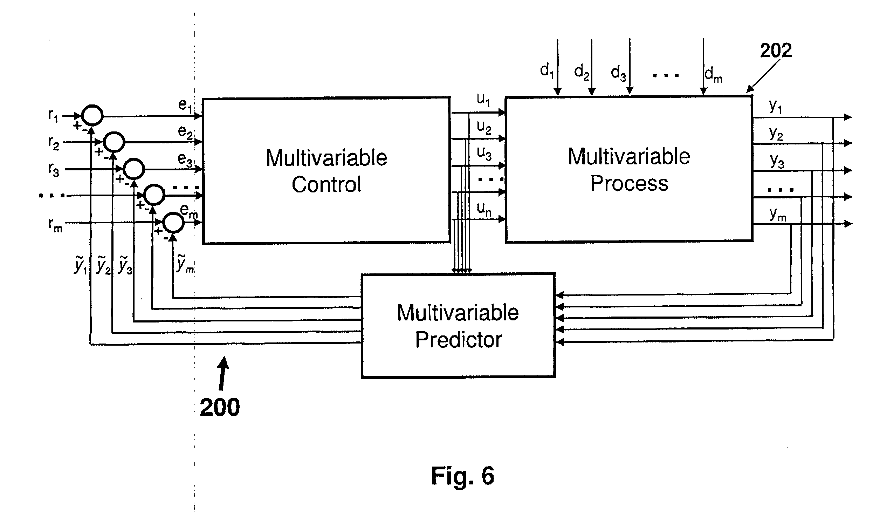

Referring to Fig. 6, there is shown a schematic drawing of a multivariable control system 200 controlling a multivariable process 202 (such as the paper making process 70 or another process). A multivariable control system, (such as the multivariable control system 200) usually uses the currently measured controlled variables $y(z)$, the input to output response model $G(z)$ of a multivariable process and an objective function Q that defines the control goal of the system to derive a set of optimal control actions for the manipulated variables $u(z)$. The control goal defines what a multivariable control system is set to achieve based on the current measurement of controlled variables $y(z)$ and control constraints. The control goal is commonly set to minimize the deviation between the target $r(z)$ and the prediction $\tilde{y}(z)$ of the controlled variables while keeping all the control actions to the multivariable process within the control constraints. This control goal is usually specified in the following objective function:

$$Q(t) = \sum_{k=1}^{h_p} \left\| \tilde{y}(t+k) - r(t+k) \right\|_W^2 + \sum_{j=0}^{h_u} \left\{ \left\| Tu(t+j) \right\|_{R_0}^2 + \left\| Du(t+j) \right\|_{R_1}^2 + \left\| Su(t+j) \right\|_{R_2}^2 \right\}$$

where
$r(t+k)$ is the reference target for the controlled variable y at the kth step from the current time t;
$\tilde{y}(t+k)$ is the predicted controlled variable at the $k$th step from the current time $t$;
$u(t+j)$ is the manipulated variable at the $j$th step from the current time $t$;
W is a weighting matrix that adjusts the priorities of controlled variables ;
T, D, S are transformation matrices for manipulated variables;
$R_0$, $R_1$, $R_2$ are weighting matrices that adjust the priorities of manipulated variables;
$h_p$ is the prediction horizon of the controlled variable;
$h_u$ is the control horizon of the manipulated variable.
The manipulated variables are subject to the constraints:

$u_L \leq u \leq u_H$ : high and low limits;
$|\Delta u| \leq \Delta_{max}$ : maximal allowable control change;
$|Lu| \leq L_{max}$ : other linear constraints such as first and/or second order differences.

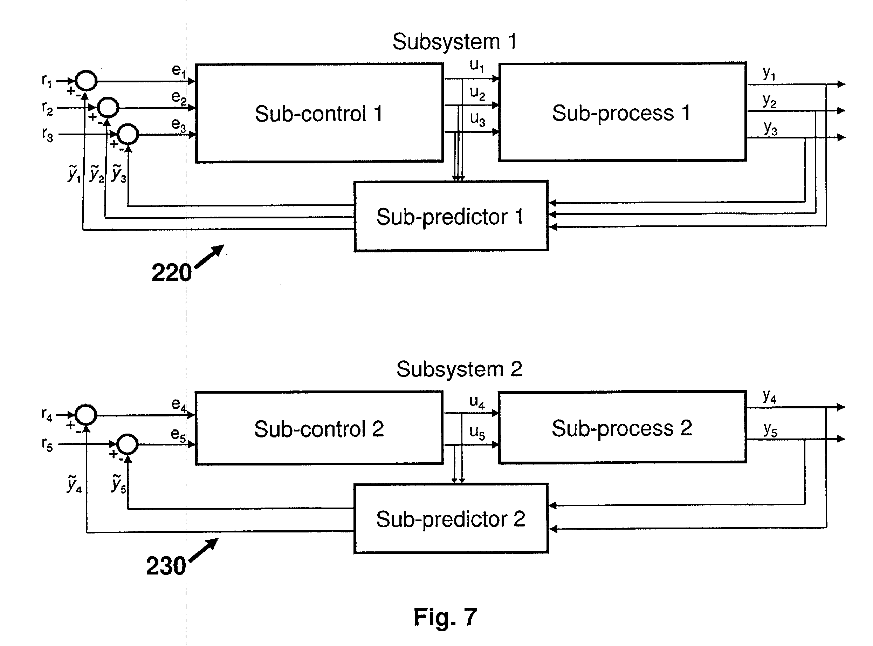

In the objective function, the weighting matrices $W, R_0, R_1, R_2$, etc. are also known as tuning parameters for setting the priorities among controlled and manipulated variables. For simplicity and intuitiveness for an operational user, these tuning parameters are specified with a set of qualitative classifiers such as "high", "medium high", "medium", "medium low", and "low" to indicate the priority or the importance of each involved variables. These qualitative classifiers are mapped to a group of numerical values that are actually used in the objective function Q.
Under an ideal condition, all manipulated and controlled variables are available to be used in the above multivariable control system. The multivariable control system will minimize the objective function Q that consists of the deviations of all controlled variables and weightings on all manipulated variables. However, under various conditions, not all manipulated and controlled variables are readily available to be used in a multivariable control system. For example, a paper machine usually produces multiple grades of paper sheet. Each grade of paper has different quality specifications. Some grades may have stringent specifications on some quality parameters such as weight, moisture, twist, etc., but other grades may have very wide specifications for the same quality parameters. In the case where the specification of a quality parameter is not stringent, then that sheet property can be excluded from a multivariable control system so that the control can focus on other key quality variables with higher priorities. On the manipulated variables side, some set of actuators may be out of service and simply unavailable or certain actuators are not needed for some paper grades. In practice, there is a strong need to allow users to easily divide a full system into a number of smaller subsystems or combine smaller subsystems into a larger subsystem.
Referring to Fig. 7, two separate sub-control systems 220 and 230 are created to control sub-processes 80 and 90 in Fig. 3, respectively. Under this configuration, the first sub-control system 220 uses the response model $G_1(z)$:

$y(z) = G_1(z)u(z) + d(z)$

$$G_1(z) = \begin{bmatrix} G_{11}(z) & G_{12}(z) & G_{13}(z) \\ G_{21}(z) & G_{22}(z) & G_{23}(z) \\ G_{31}(z) & G_{32}(z) & G_{33}(z) \end{bmatrix}$$

where $G_1(z)$ is a 3x3 response model,
$y(z) = [y_1(z)\ y_2(z)\ y_3(z)]^T$,
$u(z) = [u_1(z)\ u_2(z)\ u_3(z)]^T$,
$d(z) = [d_1(z)\ d_2(z)\ d_3(z)]^T$
and the following objective function $Q_1$ to control the sub-process 80.

$$Q_1(t) = \sum_{k=1}^{h_p^1} \left\| \tilde{y}(t+k) - r(t+k) \right\|_{W^1}^2 + \sum_{j=0}^{h_u^1} \left\{ \left\| Tu(t+j) \right\|_{R_0^1}^2 + \left\| Du(t+j) \right\|_{R_1^1}^2 + \left\| Su(t+j) \right\|_{R_2^1}^2 \right\}$$

where

$W^1$ is a weighting matrix that adjusts the priorities of controlled variables ;

$R_0^1, R_1^1, R_2^1$ are weighting matrices that adjust the priorities of manipulated variables;

$h_p^1$ is the prediction horizon of the controlled variable;

$h_u^1$ is the control horizon of the manipulated variable.

Similarly, the second subsystem 230 uses the response model $G_2(z)$:

$y(z) = G_2(z)u(z) + d(z)$

$$G_2(z) = \begin{bmatrix} G_{44}(z) & G_{45}(z) \\ G_{54}(z) & G_{55}(z) \end{bmatrix}$$

where $G_2(z)$ is a 2x2 response model,
$y(z) = [y_4(z)\ y_5(z)]^T$,
$u(z) = [u_4(z)\ u_5(z)]^T$,
$d(z) = [d_4(z)\ d_5(z)]^T$
and the following objective function $Q_2$ to control the sub-process 90.

$$Q_2(t) = \sum_{k=1}^{h_p^2} \left\| \tilde{y}(t+k) - r(t+k) \right\|_{W^2}^2 + \sum_{j=0}^{h_u^2} \left\{ \left\| Tu(t+j) \right\|_{R_0^2}^2 + \left\| Du(t+j) \right\|_{R_1^2}^2 + \left\| Su(t+j) \right\|_{R_2^2}^2 \right\}$$

where

$W^2$ is a weighting matrix that adjusts the priorities of controlled variables ;

$R_0^2, R_1^2, R_2^2$ are weighting matrices that adjust the priorities of manipulated variables;

$h_p^2$ is the prediction horizon of the controlled variable;

$h_u^2$ is the control horizon of the manipulated variable.

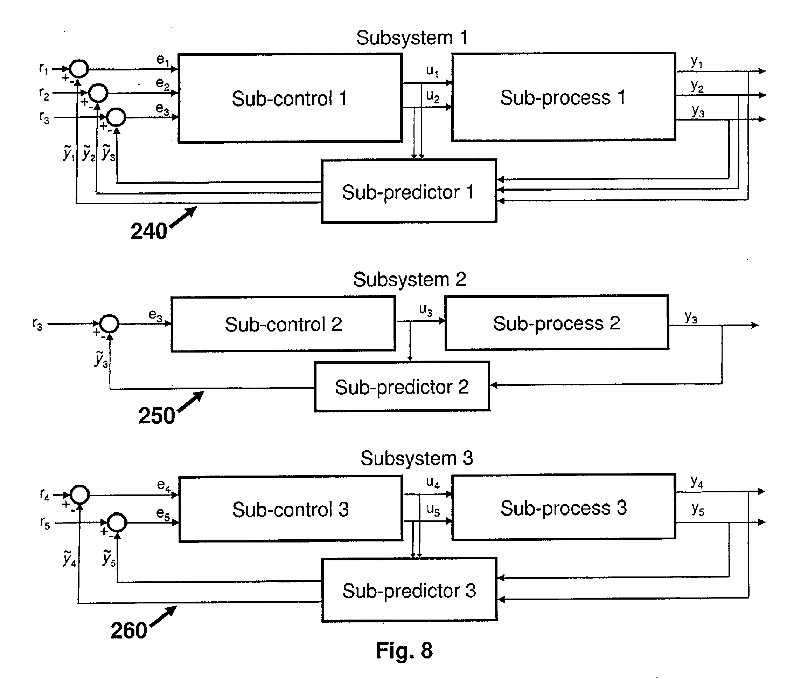

Referring to Fig. 8, three separate sub-control systems 240, 250, 260 are created to control sub-processes 100, 110, 120 in Fig. 4, respectively. The first sub-control system 240 uses the response model $G_1(z)$:

$y(z) = G_1(z)u(z) + d(z)$

$$G_1(z) = \begin{bmatrix} G_{11}(z) & G_{12}(z) \\ G_{21}(z) & G_{22}(z) \\ G_{31}(z) & G_{32}(z) \end{bmatrix}$$

where $G_1(z)$ is a 3x2 response model,
$y(z) = [y_1(z)\ y_2(z)\ y_3(z)]^T$,
$u(z) = [u_1(z)\ u_2(z)]^T$,
$d(z) = [d_1(z)\ d_2(z)\ d_3(z)]^T$
and the following objective function $Q_1$ to control the sub-process 100.

$$Q_1(t) = \sum_{k=1}^{h_p^1} \left\| \tilde{y}(t+k) - r(t+k) \right\|_{W^1}^2 + \sum_{j=0}^{h_u^1} \left\{ \left\| Tu(t+j) \right\|_{R_0^1}^2 + \left\| Du(t+j) \right\|_{R_1^1}^2 + \left\| Su(t+j) \right\|_{R_2^1}^2 \right\}$$

where
$W^1$ is a weighting matrix that adjusts the priorities of controlled variables;

$R_0^1, R_1^1, R_2^1$ are weighting matrices that adjust the priorities of manipulated variables;

$h_p^1$ is the prediction horizon of the controlled variable;

$h_u^1$ is the control horizon of the manipulated variable.
The second sub-control system 250 uses the response model $G_2(z)$:

$y(z) = G_2(z)u(z) + d(z)$
$G_2(z) = [G_{33}(z)]$

where $G_2(z)$ is a 1x1 response model,
$y(z) = [y_3(z)]^T$,
$u(z) = [u_3(z)]^T$,
$d(z) = [d_3(z)]^T$
and the following objective function $Q_2$ to control the sub-process 110,

$$Q_2(t) = \sum_{k=1}^{h_p^2} \left\| \tilde{y}(t+k) - r(t+k) \right\|_{W^2}^2 + \sum_{j=0}^{h_u^2} \left\{ \left\| Tu(t+j) \right\|_{R_0^2}^2 + \left\| Du(t+j) \right\|_{R_1^2}^2 + \left\| Su(t+j) \right\|_{R_2^2}^2 \right\}$$

where
$W^2$ is a weighting matrix that adjusts the priorities of controlled variables;

$R_0^2, R_1^2, R_2^2$ are weighting matrices that adjust the priorities of manipulated variables;

$h_p^2$ is the prediction horizon of the controlled variable;

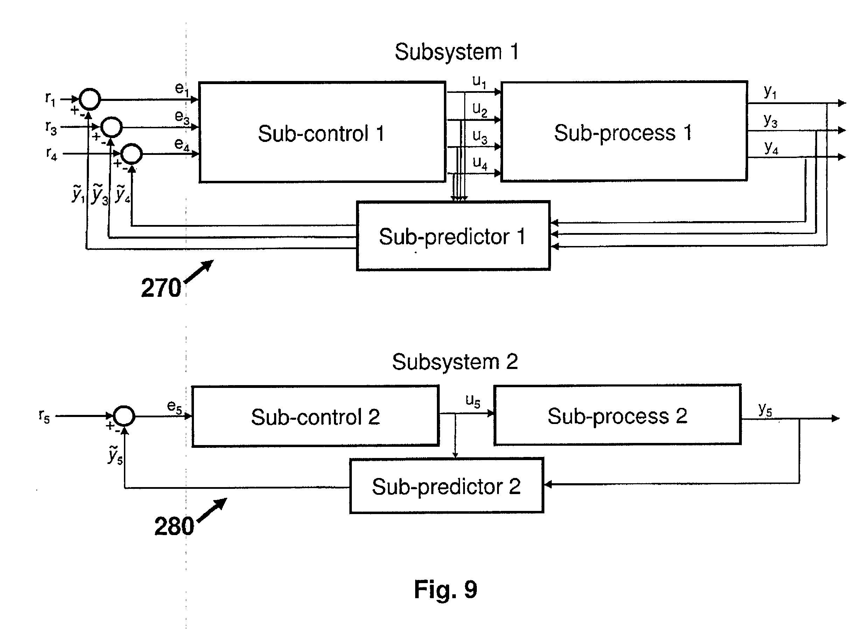

$h_u^2$ is the control horizon of the manipulated variable.
The third sub-control system 260 is the same as the sub-control system 230 described above and, thus, for purposes of brevity will not be described again.
Referring to Fig. 9, two separate sub-control systems 270, 280 are created to control sub-processes 130, 140 in Fig. 5, respectively. the first subsystem 270 uses the response model $G_1(z)$:

$y(z) = G_1(z)u(z) + d(z)$

$$G_1(z) = \begin{bmatrix} G_{11}(z) & G_{12}(z) & G_{13}(z) & G_{14}(z) \\ G_{21}(z) & G_{22}(z) & G_{23}(z) & G_{24}(z) \\ G_{31}(z) & G_{32}(z) & G_{33}(z) & G_{34}(z) \end{bmatrix}$$

where $G_1(z)$ is a 3x4 response model,
$y(z) = [y_1(z)\ y_2(z)\ y_3(z)]^T$,
$u(z) = [u_1(z)\ u_2(z)\ u_3(z)\ u_4(z)]^T$,
$d(z) = [d_1(z)\ d_2(z)\ d_3(z)]^T$

$$Q_1(t) = \sum_{k=1}^{h_p^1} \left\| \tilde{y}(t+k) - r(t+k) \right\|_{W^1}^2 + \sum_{j=0}^{h_u^1} \left\{ \left\| Tu(t+j) \right\|_{R_0^1}^2 + \left\| Du(t+j) \right\|_{R_1^1}^2 + \left\| Su(t+j) \right\|_{R_2^1}^2 \right\}$$

where

$W^1$ is a weighting matrix that adjusts the priorities of controlled variables ;

$R_0^1, R_1^1, R_2^1$ are weighting matrices that adjust the priorities of manipulated variables;

$h_p^1$ is the prediction horizon of the controlled variable;

$h_u^1$ is the control horizon of the manipulated variable.

For purposes of brevity, the second sub-control system 280 will not be described because it is similar to the sub-control system 250, but utilizes a different controlled variable and a different manipulated variable.

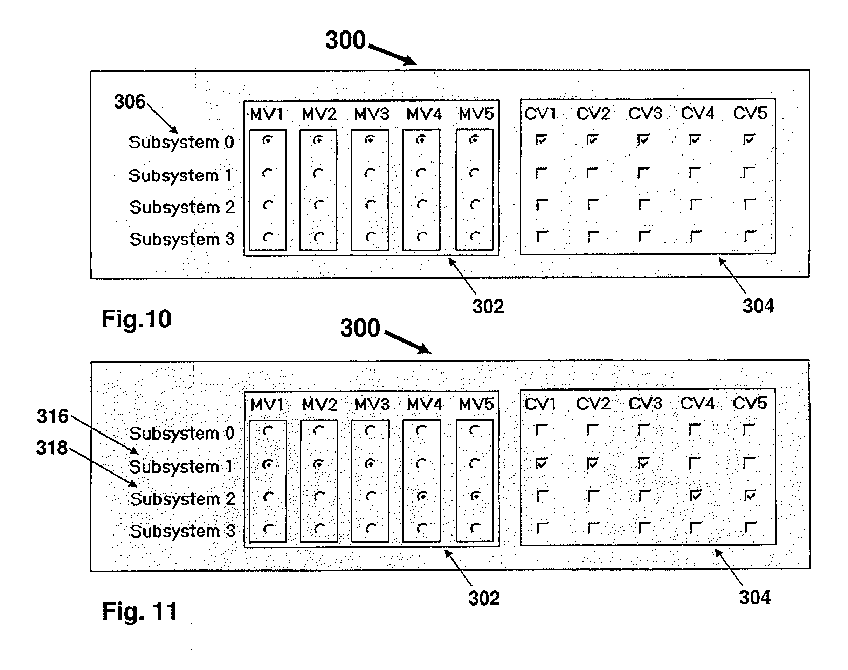

In the present invention, the creation of various sub-control systems is performed using a configuration table 300 shown in Figures 10-13, which may be displayed on a user interface device of the computer system 28. The configuration table 300 consists of a manipulated variables (MV) table 302 and a controlled variables (CV) table 304. The MV table 302 includes a plurality of selectable elements arranged in a plurality of rows and columns, wherein each column represents a manipulated variable (e.g., MV1, MV2, etc.) and each row represents a Subsystem (e.g. Subsystem 0, Subsystem 1, etc.). Similarly, the CV table 304 includes a plurality of selectable elements arranged in a plurality of rows and columns, wherein each column represents a controlled variable (e.g., CV1, CV2, etc.) and each row represents a Subsystem (e.g. Subsystem 0, Subsystem 1, etc.). When an element in one of the tables 302, 304 is selected, its corresponding variable is assigned to its corresponding Subsystem. When the configuration table 300 is displayed on a user interface, the elements in the MV table 302 may be selectable radio buttons, and the elements in the CV table 304 may be selectable check boxes. A user is allowed to choose various combinations of manipulated variables and controlled variables for each Subsystem. The selection of manipulated variables and controlled variables in the configuration table 300 creates a first table, wherein manipulated variables are assigned to sub-control systems, and a second table, wherein controlled variables are assigned to the sub-control systems.

In the configuration table 302, each Subsystem represents a sub-control system that will be configured in accordance with the control principles described earlier, based on the manipulated variables and controlled variables that are assigned to the Subsystem in the configuration table 302 and subject to certain restrictions. One restriction is that at least one manipulated variable and at least one controlled variable must be assigned to a sub-control system. Another restriction is that a particular manipulated variable can only be assigned to one sub-control system. This restriction may be enforced automatically in the configuration table 300 by permitting only one radio button in a manipulated variable column to be selected at a time.

In Fig. 10, all of the manipulated variables (MV1-MV5) in the MV table 302 have been assigned to Subsystem 0 and all of the controlled variables (CV1-CV5) in the CV table 304 have been assigned to Subsystem 0. Thus, Subsystem 0 is configured with five manipulated variables and five controlled variables and is a controllable sub-process. Subsystem 0 corresponds to the multivariable control system 200 schematically shown in Fig. 6, with m=n=5. In other words, the assignment of the manipulated variables and controlled variables to Subsystem 0 in Fig. 10 will result in the creation of the sub-control system 200. The other Subsystems in table 300 do not have manipulated variables or controlled variables. Therefore they are uncontrollable sub-control systems. In this regard, it should be noted that all of the manipulated variables have been assigned to Subsystem 0 and, thus, no other sub-control systems are permitted (without removing a manipulated variable from the Subsystem 0.

In Fig. 11, manipulated and controlled variables have been assigned to Subsystem 1 and to Subsystem 2. More specifically, manipulated variables MV1, MV2 and MV3 and controlled variables CV1, CV2 and CV3 have been assigned to Subsystem 1 and manipulated variables MV4 and MV5 and controlled variables CV4 and CV5 have been assigned to Subsystem 2. The Subsystems 1, 2 are controllable and correspond to the sub-control systems 220, 230 schematically shown in Fig. 7, respectively. The other Subsystems (Subsystems 0, 3) do not have any manipulated variables or controlled variables and are not controllable.

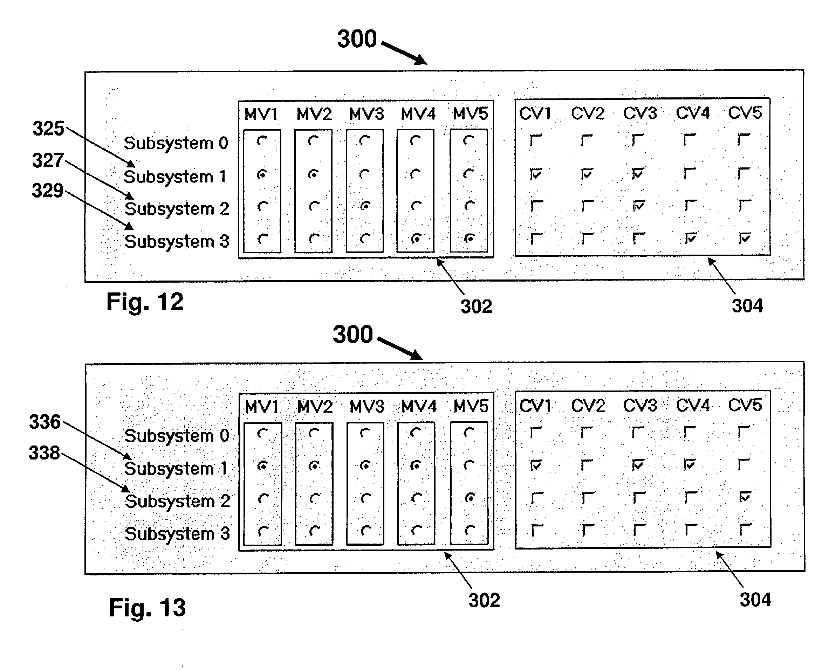

In Fig. 12, manipulated and controlled variables have been assigned to Subsystem 1, Subsystem 2 and Subsystem 3. More specifically: manipulated variables MV1 and MV2 and controlled variables CV1, CV2 and CV3 have been assigned to Subsystem 1; manipulated variable MV3 and controlled variable CV3 have been assigned to Subsystem 2; and manipulated variables MV4 and MV5 and controlled variables CV4 and CV5 have been assigned to Subsystem 3. The Subsystems 1, 2, 3 are controllable and correspond to the subsystems 240, 250 and 260 schematically shown in Fig. 8, respectively. Subsystem 0 does not have any manipulated variables or controlled variables and is not controllable.

In Fig. 13, manipulated and controlled variables have been assigned to Subsystem 1 and Subsystem 2. More specifically, manipulated variables MV1, MV2, MV3 and MV4 and controlled variables CV1, CV3 and CV4 have been assigned to Subsystem 1 and manipulated variable MV5 and controlled variable CV5 have been assigned to Subsystem 2. The Subsystems 1, 2 are controllable and correspond to the subsystems 270 and 280 schematically shown in Fig. 9, respectively. Subsystems 0, 3 do not have any manipulated variables or controlled variables and are not controllable.

Generally, the present invention permits a user to select one of a plurality of different sub-control systems for use in controlling a multivariable process. In order to provide proper control for a multivariable process, the following rules must be followed when setting up and using a multivariable control configuration selection system embodied in accordance with the present invention:

1. must have at least one controlled variable for the entire control system;
2. must have at least one manipulated variable for the entire control system;
3. at least one sub-control system must be defined;
4. at least one controlled variable must be associated with each controllable sub-control system;
5. at least one manipulated variable must be configured with each controllable sub-control system; and
6. no manipulated variable (actuator) is allowed to be associated with more than one controllable sub-control system simultaneously.

A sub-control system that does not satisfy the above rules is not controllable and will be blocked from control. In practice, there could be one or more subsystems that simultaneously satisfy the above rules and are considered controllable sub-control systems. The control of all controllable sub-control systems can be activated simultaneously or independently.

In a configurable multivariable control system, the control computing program will perform the following inspection before performing a multivariable control calculation:

1. determine which sub-control systems are controllable, neglect the non-controllable sub-control systems;
2. determine which controllable sub-control systems are activated for control, neglect the inactive sub-control systems;
3. determine which manipulated and controlled variables are configured for the activated sub-control system;
4. pick all tuning and setup parameters associated with the activated sub-control systems, calculate the multivariable control actions one by one for each activated sub-control system;
5. output control actions to the configured actuators; and
6. repeat the above routine at every control interval.

As a result of the foregoing, a multivariable control system can be easily configured as a single interactive control system or multiple multivariable control systems with subsets of measurements and actuators as their inputs and outputs respectively. The devised structure provides a high degree of flexibility to users and allows them to make their own decision to pick and choose the most suitable subsystem configurations for practical applications.

The present invention allows users to dynamically change manipulated and controlled variables, switch between different configurations, and apply different control settings to different subsystems in order to achieve different control objectives. In practical applications of multivariable control systems, the aforementioned flexibility is extremely important for empowering operational personnel. The flexible configurability allows users to adapt a multivariable control system to different production and/or machine conditions.

With the present invention, the control of a process can be quickly changed to accommodate a change in the availability of equipment. For example, if, in the paper machine 10 above, the steambox 36 is taken off-line for maintenance, an operator may quickly change the control of the paper making machine from the first configuration 300 to the third control configuration 320, which will allow subsystems 325 and 329 control the machine while subsystem 327 is under the maintenance.

In addition to easily accommodating changes in the availability of equipment, the present invention permits both control separation and consolidation. With regard to control separation, one large multivariable system can be broken down into several smaller multivariable sub-control systems. The smaller multivariable sub-control systems can be activated either simultaneously or independently. This flexible approach allows users to tackle certain production or machine conditions more appropriately and gain better controllability. With regard to control consolidation, several smaller multivariable sub-control systems can be combined into one large multivariable control system. This is particularly useful after users initially use the smaller multivariable systems and later want to extend the system to include more inputs and outputs.

The present invention can be applied to many kinds of multivariable control systems where each controlled or manipulated variable can be either a scalar or an array. The technique can be used for temporal domain multivariable control systems such as a machine-direction control system, spatial domain control systems such as a cross-machine profile control system, or the combination of the both.

As will be appreciated by one of skill in the art and as before mentioned, the present invention may be embodied as or take the form of the methods previously described, a computing device or system having program code configured to carry out the methods, a computer program product on a computer-usable or computer-readable medium having computer-usable program code embodied in the medium. The computer-usable or computer-readable medium may be any medium that can contain, store, communicate, propagate, or transport the program for use by or in connection with the instruction execution system, apparatus, or device and may by way of example but without limitation, be an electronic, magnetic, optical, electromagnetic, infrared, or semiconductor system, apparatus, device, or propagation medium or even be paper or other suitable medium upon which the program is printed. More specific examples (a non-exhaustive list) of the computer-readable medium would include: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Computer program code or instructions for carrying out operations of the present invention may be written in any suitable programming language provided it allows achieving the previously described technical results. The program code may execute entirely on the user's computing device, partly on the user's computing device, as a stand-alone software package, partly on the user's computer and partly on a remote computer or entirely on a remote computer or server or a virtual machine. In the latter scenario, the remote computer may be connected to the user's computer through a local area network (LAN) or a wide area network (WAN), or the connection may be made to an external computer (for example, through the Internet using an Internet Service Provider).

While the present invention is particularly suitable for use in controlling a paper machine, as described above, it should be appreciated that the present invention may be used in many other multivariable control applications. The present invention is applicable to any industrial process having a multivariable nature, wherein a multivariable control system can be used to improve product quality and/or process operation.

It is to be understood that the description of the foregoing exemplary embodiment(s) is (are) intended to be only illustrative, rather than exhaustive, of the present invention. Those of ordinary skill will be able to make certain additions, deletions, and/or modifications to the embodiment(s) of the disclosed subject matter without departing from the scope of the invention, as defined by the appended claims.

**Claims**

1. A method for creating a control system (200) for an industrial multivariable process (202) with one or more manipulated variables (MV1, MV2, MV3, MV4, MV5) and one or more controlled variables (CV1, CV2, CV3, CV4, CV5), the method **characterized in that** it comprises:

   displaying a first table (302) in a user interface device (300), wherein one or more manipulated variables (MV1, MV2, MV3, MV4, MV5) are selectively assignable to a plurality of sub-control systems (200, 220, 230, 240, 250, 260, 270, 280), each manipulated variable (MV1, MV2, MV3, MV4, MV5) being assignable to no more than one sub-control system (200, 220, 230, 240, 250, 260, 270, 280);
   displaying a second table (304) in the user interface device (300), wherein one or more controlled variables (CV1, CV2, CV3, CV4, CV5) are selectively assignable to the plurality of sub-control systems (200, 220, 230, 240, 250, 260, 270, 280);
   receiving assignments of one or more of the manipulated variables (MV1, MV2, MV3, MV4, MV5) to one or more sub-control systems of said plurality of sub-control systems (200, 220, 230, 240, 250, 260, 270, 280) and one or more of the controlled variables (CV1, CV2, CV3, CV4, CV5) to one or more sub-control systems of said plurality of sub-control systems (200, 220, 230, 240, 250, 260, 270, 280), the assignments being received through the user interface device (300);

using the received assignments to generate one or more sub-process response models; and

using the one or more sub-process response models to generate the one or more sub-control systems (200, 220, 230, 240, 250, 260, 270, 280), which are operable to control one or more sub-processes (202, 80, 90, 100, 110, 120, 130, 140), each sub-control system (200, 220, 230, 240, 250, 260, 270, 280) including a set of tuning parameters.

2. The method of claim 1, wherein the industrial multivariable process (202) comprises a plurality of manipulated variables (MV1, MV2, MV3, MV4, MV5) and a plurality of controlled variables (CV1, CV2, CV3, CV4, CV5).

3. The method of claim 1, wherein the one or more sub-processes (202, 80, 90, 100, 110, 120, 130, 140) include the industrial multivariable process itself (202).

4. The method of claim 1, wherein the step of generating the one or more sub-control systems (200, 220, 230, 240, 250, 260, 270, 280) comprises generating a sub-control system (200, 220, 230, 240, 250, 260, 270, 280) for each sub-process (202, 80, 90, 100, 110, 120, 130, 140) and associating one set of tuning parameters to each sub-control system (200, 220, 230, 240, 250, 260, 270, 280).

5. The method of claim 1, wherein the step of receiving assignments comprises receiving an assignment of a first one of the manipulated variables (MV1, MV2, MV3, MV4, MV5) to a first one of the sub-control systems (200, 220, 230, 240, 250, 260, 270, 280), and wherein the method further comprises: receiving a subsequent assignment of the first one of the manipulated variables (MV1, MV2, MV3, MV4, MV5) to a second one of the sub-control systems, and automatically un-assigning the first one of the manipulated variables (MV1, MV2, MV3, MV4, MV5) from the first one of the sub-control systems.

6. The method of claim 1, wherein the step of generating the one or more sub-control systems (200, 220, 230, 240, 250, 260, 270, 280) further comprises:

creating a separate set of tuning parameters for each sub-control system (200, 220, 230, 240, 250, 260, 270, 280) for each sub-process (202, 80, 90, 100, 110, 120, 130, 140).

7. The method of claim 1, wherein each sub-control system (200, 220, 230, 240, 250, 260, 270, 280) which has been assigned with at least one manipulated variable (MV1, MV2, MV3, MV4, MV5) and at least one controlled variable (CV1, CV2, CV3, CV4, CV5) is controllable and is activated for control, and wherein each sub-control system which has not been assigned with at least one manipulated variable (MV1, MV2, MV3, MV4, MV5) and at least one controlled variable (CV1, CV2, CV3, CV4, CV5) is not controllable and is not activated for control.

8. The method of claim 7, wherein the method further comprises:

having at least one activated sub-control system (200, 220, 230, 240, 250, 260, 270, 280).

9. The method of claim 1, wherein the tuning parameters of each sub-control system (200, 220, 230, 240, 250, 260, 270, 280) have qualitative classifiers selected from the group consisting of "high", "medium high", "medium", "medium low" "low" and combinations of the foregoing, wherein each classifier corresponds to a numerical value that is used in an objective function.

10. A computer system (28) operable to perform a method for creating a control system (200) for an industrial multivariable process (202) with one or more manipulated variables (MV1, MV2, MV3, MV4, MV5) and one or more controlled variables (CV1, CV2, CV3, CV4, CV5), the method **characterized in that** it comprises:

displaying a first table (302) in a user interface device (300), wherein one or more of the manipulated variables (MV1, MV2, MV3, MV4, MV5) are selectively assignable to a plurality of sub-control systems (200, 220, 230, 240, 250, 260, 270, 280), each manipulated variable (MV1, MV2, MV3, MV4, MV5) being assignable to no more than one sub-control system (200, 220, 230, 240, 250, 260, 270, 280);

displaying a second table (304) in the user interface device (300), wherein one or more of the controlled variables (CV1, CV2, CV3, CV4, CV5) are selectively assignable to the plurality of sub-control systems (200, 220, 230, 240, 250, 260, 270, 280);

receiving assignments of one or more of the manipulated variables (MV1, MV2, MV3, MV4, MV5) to one or more sub-control systems of said plurality of sub-control systems (200, 220, 230, 240, 250, 260, 270, 280) and one or more of the controlled variables (CV1, CV2, CV3, CV4, CV5) to one or more sub-control systems of said plurality of sub-control systems (200, 220, 230, 240, 250, 260, 270, 280), the assignments being received through the user interface device (300);

using the received assignments to generate one or more sub-process response models; and

using the one or more sub-process response models to generate the one or more sub-control systems (200, 220, 230, 240, 250, 260, 270, 280), which are operable to control one or more sub-processes (202, 80, 90, 100, 110, 120, 130, 140), each sub-control system (200, 220, 230, 240, 250, 260, 270, 280) including a set of tuning parameters.

11. The computer system (28) of claim 10, wherein the one or more sub-processes (202, 80, 90, 100, 110, 120, 130, 140) include the industrial multivariable process (202) itself.

12. The computer system (28) of claim 10, wherein the step of generating the one or more sub-control systems (200, 220, 230, 240, 250, 260, 270, 280) comprises generating a sub-control system for each sub-process (202, 80, 90, 100, 110, 120, 130, 140) and associating one set of tuning parameters to each sub-control system (200, 220, 230, 240, 250, 260, 270, 280).

13. The computer system (28) of claim 10, wherein the step of receiving assignments comprises receiving an assignment of a first one of the manipulated variables (MV1, MV2, MV3, MV4, MV5) to a first one of the sub-control systems (200, 220, 230, 240, 250, 260, 270, 280), and wherein the method further comprises: receiving a subsequent assignment of the first one of the manipulated variables (MV1, MV2, MV3, MV4, MV5) to a second one of the sub-control systems, and automatically un-assigning the first one of the manipulated variables (MV1, MV2, MV3, MV4, MV5) from the first one of the sub-control systems (200, 220, 230, 240, 250, 260, 270, 280).

14. The computer system (28) of claim 10, wherein the step of generating the one or more sub-control systems (200, 220, 230, 240, 250, 260, 270, 280) further comprises:

creating a separate set of tuning parameters for each sub-control system (200, 220, 230, 240, 250, 260, 270, 280) for each sub-process (202, 80, 90, 100, 110, 120, 130, 140).

15. The computer system of claim 10, wherein each sub-control system which has been assigned with at least one manipulated variable (MV1, MV2, MV3, MV4, MV5) and at least one controlled variable (CV1, CV2, CV3, CV4, CV5) is controllable and is activated for control, and wherein each sub-control system which has not been assigned with at least one manipulated variable (MV1, MV2, MV3, MV4, MV5) and at least one controlled variable (CV1, CV2, CV3, CV4, CV5) is not controllable and is not activated for control, and wherein the method further comprises:

having at least one activated sub-control system (200, 220, 230, 240, 250, 260, 270, 280).

**Patentansprüche**

1. Verfahren zum Erzeugen eines Steuerungssystems (200) für einen Mehrgrößen-Industrieprozess (202) mit einer oder mehreren Stellgrößen (MV1, MV2, MV3, MV4, MV5) und einer oder mehreren Steuergrößen (CV1, CV2, CV3, CV4, CV5), wobei das Verfahren **dadurch gekennzeichnet ist, dass** es folgende Schritte beinhaltet:

Anzeigen einer ersten Tabelle (302) in einer Benutzerschnittstellenvorrichtung (300), wobei eine oder mehrere Stellgrößen (MV1, MV2, MV3, MV4, MV5) einer Mehrzahl von Teilsteuerungssystemen (200, 220, 230, 240, 250, 260, 270, 280) selektiv zuordenbar sind, wobei jede Stellgröße (MV1, MV2, MV3, MV4, MV5) nicht mehr als einem Teilsteuerungssystem (200, 220, 230, 240, 250, 260, 270, 280) zuordenbar ist;

Anzeigen einer zweiten Tabelle (304) in der Benutzerschnittstellenvorrichtung (300), wobei eine oder mehrere Steuergrößen (CV1, CV2, CV3, CV4, CV5) der Mehrzahl der Teilsteuerungssysteme (200, 220, 230, 240, 250, 260, 270, 280) selektiv zuordenbar sind;

Empfangen von Zuordnungen von einer oder mehreren der Stellgrößen (MV1, MV2, MV3, MV4, MV5) zu einem oder mehreren Teilsteuerungssystemen von der Mehrzahl von Teilsteuerungssystemen (200, 220, 230, 240, 250, 260, 270, 280) und von einer oder mehreren Steuergrößen (CV1, CV2, CV3, CV4, CV5) zu einem oder mehreren Teilsteuerungssystemen von der Mehrzahl von Teilsteuerungssystemen (200, 220, 230, 240, 250, 260, 270, 280), wobei die Zuordnungen durch die Benutzerschnittstellenvorrichtung (300) empfangen werden; Verwenden der empfangenen Zuordnungen, um einen oder mehrere Teilprozessreaktionsmodelle zu erzeugen; und

Verwenden des einen oder der mehreren Teilprozessreaktionsmodelle, um das eine oder die mehreren Teilsteuerungssysteme (200, 220, 230, 240, 250, 260, 270, 280) zu erzeugen, die betreibbar sind, um einen oder mehrere Teilprozesse (2002, 80, 90, 100, 110, 120, 140) zu steuern, wobei jedes Teilsteuerungssystem (200, 220, 230, 240, 250, 260, 270, 280) einen Satz von Abstimmparametern beinhaltet.

2. Verfahren nach Anspruch 1, wobei der Mehrgrößen-Industrieprozess (202) eine Mehrzahl von Stellgrößen (MV1, MV2, MV3, MV4, MV5) und eine Mehrzahl von Steuergrößen (CV1, CV2, CV3, CV4, CV5).

3. Verfahren nach Anspruch 1, wobei der eine oder die mehreren Teilprozesse (202, 80, 90, 100, 110, 120, 130, 140) den Mehrgrößen-Industrieprozess (202) beinhalten.

4. Verfahren nach Anspruch 1, wobei der Schritt des Erzeugens des einen oder der mehreren Teilsteuerungssysteme (200, 220, 230, 240, 250, 260, 270, 280) den Schritt des Erzeugens eines Teilsteuerungssystems (200, 220, 230, 240, 250, 260, 270, 280) für jeden Teilprozess (202, 80, 90, 100, 110, 120, 130, 140) und den Schritt des Zuordnens eines Satzes von Abstimmparametern zu jedem Teilsteuerungssystem (200, 220, 230, 240, 250, 260, 270, 280) beinhaltet.

5. Verfahren nach Anspruch 1, wobei der Schritt des Empfangens von Zuordnungen ein Empfangen einer Zuordnung von einer ersten der Stellgrößen (MV1, MV2, MV3, MV4, MV5) zu einem ersten der Teilsteuerungssysteme (200, 220, 230, 240, 250, 260, 270, 280) beinhaltet, und wobei das Verfahren ferner beinhaltet: Empfangen einer anschließenden Zuordnung der ersten der Stellgrößen (MV1, MV2, MV3, MV4, MV5) zu einem zweiten der Teilsteuerungssysteme, und automatisches Aufheben der Zuordnung der ersten der Stellgrößen (MV1, MV2, MV3, MV4, MV5) von dem ersten der Teilsteuerungssysteme.

6. Verfahren nach Anspruch 1, wobei der Schritt des Erzeugens von einem oder mehreren der Teilsteuerungssysteme (200, 220, 230, 240, 250, 260, 270, 280) ferner beinhaltet:

Erzeugen eines separaten Satzes von Abstimmparametern für jedes Teilsteuerungssystem (200, 220, 230, 240, 250, 260, 270, 280) für jeden Teilprozess (202, 80, 90, 100, 110, 120, 130, 140).

7. Verfahren nach Anspruch 1, wobei jedes Teilsteuerungssystem (200, 220, 230, 240, 250, 260, 270, 280), das zumindest einer Stellgröße (MV1, MV2, MV3, MV4, MV5) und zumindest einer Steuergröße (CV1, CV2, CV3, CV4, CV5) zugeordnet worden ist, steuerbar ist und zur Steuerung aktiviert wird, und wobei jedes Teilsteuerungssystem, das zumindest einer Stellgröße (MV1, MV2, MV3, MV4, MV5) und zumindest einer Steuergröße (CV1, CV2, CV3, CV4, CV5) nicht zugeordnet worden ist, nicht steuerbar ist und zur Steuerung nicht aktiviert wird.

8. Verfahren nach Anspruch 7, wobei das Verfahren ferner beinhaltet:

Vorliegen von zumindest einem aktivierten Teilsteuerungssystem (200, 220, 230, 240, 250, 260, 270, 280).

9. Verfahren nach Anspruch 1, wobei die Abstimmparameter von einem jeden Teilsteuerungssystem (200, 220, 230, 240, 250, 260, 270, 280) qualitative Klassifizierer aufweisen, die ausgewählt sind aus der Gruppe bestehend aus "hoch", "mittelhoch", "mittel", "mittelniedrig" und "niedrig" und Kombinationen derselben, wobei jeder Klassifizierer einem numerischen Wert entspricht, der in einer objektiven Funktion verwendet wird.

10. Computersystem (28), das betreibbar ist, um ein Verfahren zum Erzeugen eines Steuerungssystems (200) für einen Mehrgrößen-Industrieprozess (202) mit einer oder mehreren Stellgrößen (MV1, MV2, MV3, MV4, MV5) und einer oder mehreren Steuergrößen (CV1, CV2, CV3, CV4, CV5) auszuführen, wobei das Verfahren **dadurch gekennzeichnet ist, dass** es beinhaltet:

Anzeigen einer ersten Tabelle (302) in einer Benutzerschnittstellenvorrichtung (300), wobei eine oder mehrere Stellgrößen (MV1, MV2, MV3, MV4, MV5) einer Mehrzahl von Teilsteuerungssystemen (200, 220, 230, 240, 250, 260, 270, 280) selektiv zuordenbar sind, wobei jede Stellgröße (MV1, MV2, MV3, MV4, MV5) nicht mehr als einem Teilsteuerungssystem (200, 220, 230, 240, 250, 260, 270, 280) zuordenbar ist;
Anzeigen einer zweiten Tabelle (304) in der Benutzerschnittstellenvorrichtung (300), wobei eine oder mehrere der Steuergrößen (CV1, CV2, CV3, CV4, CV5) der Mehrzahl der Teilsteuerungssysteme (200, 220, 230, 240, 250, 260, 270, 280) selektiv zuordenbar sind;

Empfangen von Zuordnungen von einer oder mehreren der Stellgrößen (MV1, MV2, MV3, MV4, MV5) zu einem oder mehreren Teilsteuerungssystemen von der Mehrzahl von Teilsteuerungssystemen (200, 220, 230, 240, 250, 260, 270, 280) und von einer oder mehreren Steuergrößen (CV1, CV2, CV3, CV4, CV5) zu einem oder mehreren Teilsteuerungssystemen von der Mehrzahl von Teilsteuerungssystemen (200, 220, 230, 240, 250, 260, 270, 280), wobei die Zuordnungen durch die Benutzerschnittstellenvorrichtung (300) empfangen werden;

Verwenden der empfangenen Zuordnungen, um einen oder mehrere Teilprozessreaktionsmodelle zu erzeugen; und

Verwenden des einen oder der mehreren Teilprozessreaktionsmodelle, um das eine oder die mehreren Teilsteuerungssysteme (200, 220, 230, 240, 250, 260, 270, 280) zu erzeugen, die betreibbar sind, um einen oder mehrere Teilprozesse (202, 80, 90, 100, 110, 120, 140) zu steuern, wobei jedes Teilsteuerungssystem (200, 220, 230, 240, 250, 260, 270, 280) einen Satz von Abstimmparametern beinhaltet.

11. Computersystem (28) nach Anspruch 10, wobei der eine oder die mehreren Teilprozesse (202, 80, 90, 100, 110, 120, 130, 140) den Mehrgrößen-Industrieprozess (202) an sich umfassen.

12. Computersystem (28) nach Anspruch 10, wobei der Schritt des Erzeugens des einen oder der mehreren Teilsteuerungssysteme (200, 220, 230, 240, 250, 260, 270, 280) den Schritt des Erzeugens eines Teilsteuerungssystems für jeden Teilprozess (202, 80, 90, 100, 110, 120, 130, 140) und des Zuordnens eines Satzes von Abstimmparametern zu jedem Teilsteuerungssystem (200, 220, 230, 240, 250, 260, 270, 280) aufweist.

13. Computersystem (28) nach Anspruch 10, wobei der Schritt des Empfangens von Zuordnungen den Schritt des Empfangens einer Zuordnung von einer ersten der Stellgrößen (MV1, MV2, MV3, MV4, MV5) zu einem ersten der Teilsteuerungssysteme (200, 220, 230, 240, 250, 260, 270, 280) beinhaltet, und wobei das Verfahren ferner beinhaltet: Empfangen einer anschließenden Zuordnung der ersten der Stellgrößen (MV1, MV2, MV3, MV4, MV5) zu einem zweiten der Teilsteuerungssysteme und automatisches Aufheben der Zuweisung der ersten der Stellgrößen (MV1, MV2, MV3, MV4, MV5) von dem ersten der Teilsteuerungssysteme (200, 220, 230, 240, 250, 260, 270, 280).

14. Computersystem (28) nach Anspruch 10, wobei der Schritt des Erzeugens des einen oder der mehreren Teilsteuerungssysteme (200, 220, 230, 240, 250, 260, 270, 280) ferner beinhaltet:

Erzeugen eines separaten Satzes von Abstimmparametern für jedes Teilsteuerungssystem (200, 220, 230, 240, 250, 260, 270, 280) für jeden Teilprozess (202, 80, 90, 100, 110, 120, 130, 140).

15. Computersystem (28) nach Anspruch 10, wobei jedes Teilsteuerungssystem, das zumindest einer Stellgröße (MV1, MV2, MV3, MV4, MV5) und zumindest einer Steuergröße (CV1, CV2, CV3, CV4, CV5) zugeordnet worden ist, steuerbar ist und zur Steuerung aktiviert wird, und wobei jedes Teilsteuerungssystem, das der zumindest einer Stellgröße (MV1, MV2, MV3, MV4, MV5) und zumindest einer Steuergröße (CV1, CV2, CV3, CV4, CV5) nicht zugeordnet worden ist, nicht steuerbar ist und zur Steuerung nicht aktiviert wird, und wobei das Verfahren ferner beinhaltet:

Vorliegen von zumindest einem aktivierten Teilsteuerungssystem (200, 220, 230, 240, 250, 260, 270, 280).

**Revendications**

1. Procédé pour créer un système de commande (200) pour un processus multivariable industriel (202) avec une ou plusieurs grandeurs réglantes (MV1, MV2, MV3, MV4, MV5) et une ou plusieurs grandeurs réglées (CV1, CV2, CV3, CV4, CV5), le procédé **caractérisé en ce qu'**il comprend :

l'affichage d'une première table (302) dans un dispositif d'interface utilisateur (300), où une ou plusieurs grandeurs réglantes (MV1, MV2, MV3, MV4, MV5) sont affectables sélectivement à une pluralité de sous-systèmes de commande (200, 220, 230, 240, 250, 260, 270, 280), chaque grandeur réglante (MV1, MV2, MV3, MV4, MV5) étant affectable à un maximum d'un système de sous-commande (200, 220, 230, 240, 250, 260, 270, 280) ; l'affichage d'une seconde table (304) dans le dispositif d'interface utilisateur (300), où une ou plusieurs grandeurs réglées (CV1, CV2, CV3, CV4, CV5) sont affectables sélectivement à la pluralité de sous-systèmes de commande (200, 220, 230, 240, 250, 260, 270, 280) ;

la réception d'affectations d'une ou plusieurs des grandeurs réglantes (MV1, MV2, MV3, MV4, MV5) à un ou plusieurs sous-systèmes de commande de ladite pluralité de sous-systèmes de commande (200, 220, 230, 240, 250, 260, 270, 280) et d'une ou plusieurs des grandeurs réglées (CV1, CV2, CV3, CV4, CV5) à un ou plusieurs sous-systèmes de commande de ladite pluralité de sous-systèmes de commande (200, 220, 230, 240, 250, 260, 270, 280), les affectations étant reçues par l'intermédiaire du dispositif d'interface utilisateur (300) ;

l'utilisation des affectations reçues pour générer un ou plusieurs modèles de réponse de sous-processus ; et

l'utilisation des un ou plusieurs modèles de réponse de sous-processus pour générer les un ou plusieurs sous-systèmes de commande (200, 220, 230, 240, 250, 260, 270, 280), qui permettent de commander un ou plusieurs sous-processus (202, 80, 90, 100, 110, 120, 130, 140), chaque système de sous-commande (200, 220, 230, 240, 250, 260, 270, 280) comprenant un ensemble de paramètres de réglage.

2. Procédé selon la revendication 1, dans lequel le processus multivariable industriel (202) comprend une pluralité de grandeurs réglantes (MV1, MV2, MV3, MV4, MV5) et une pluralité de grandeurs réglées (CV1, CV2, CV3, CV4, CV5).

3. Procédé selon la revendication 1, dans lequel les un ou plusieurs sous-processus (202, 80, 90, 100, 110, 120, 130, 140) comprennent le processus multivariable industriel (202) même.

4. Procédé selon la revendication 1, dans lequel l'étape de génération des un ou plusieurs sous-systèmes de commande (200, 220, 230, 240, 250, 260, 270, 280) comprend la génération d'un système de sous-commande (200, 220, 230, 240, 250, 260, 270, 280) pour chaque sous-processus (202, 80, 90, 100, 110, 120, 130, 140) et l'association d'un ensemble de paramètres de réglage à chaque système de sous-commande (200, 220, 230, 240, 250, 260, 270, 280).

5. Procédé selon la revendication 1, dans lequel l'étape de réception d'affectations comprend la réception d'une affectation d'une première des grandeurs réglantes (MV1, MV2, MV3, MV4, MV5) à un premier des sous-systèmes de commande (200, 220, 230, 240, 250, 260, 270, 280), et dans lequel le procédé comprend en outre : la réception d'une affectation subséquente de la première des grandeurs réglantes (MV1, MV2, MV3, MV4, MV5) à un second des sous-systèmes de commande, et la désaffectation automatique de la première des grandeurs réglantes (MV1, MV2, MV3, MV4, MV5) du premier des sous-systèmes de commande.

6. Procédé selon la revendication 1, dans lequel l'étape de génération des un ou plusieurs sous-systèmes de commande (200, 220, 230, 240, 250, 260, 270, 280) comprend en outre :

la création d'un ensemble de paramètres de réglage distinct pour chaque système de sous-commande (200, 220, 230, 240, 250, 260, 270, 280) pour chaque sous-processus (202, 80, 90, 100, 110, 120, 130, 140).

7. Procédé selon la revendication 1, dans lequel chaque système de sous-commande (200, 220, 230, 240, 250, 260, 270, 280) qui s'est vu affecter au moins une grandeur réglante (MV1, MV2, MV3, MV4, MV5) et au moins une grandeur réglée (CV1, CV2, CV3, CV4, CV5) peut être commandé et est activé pour la commande, et dans lequel chaque système de sous-commande qui ne s'est pas vu affecter au moins une grandeur réglante (MV1, MV2, MV3, MV4, MV5) et au moins une grandeur réglée (CV1, CV2, CV3, CV4, CV5) ne peut pas être commandé et n'est pas activé pour la commande.

8. Procédé selon la revendication 7, dans lequel le procédé comprend en outre :

le fait d'avoir au moins un système de sous-commande (200, 220, 230, 240, 250, 260, 270, 280) activé.

9. Procédé selon la revendication 1, dans lequel les paramètres de réglage de chaque système de sous-commande (200, 220, 230, 240, 250, 260, 270, 280) ont des classifieurs qualitatifs choisis dans le groupe comprenant « haut », « moyen haut », « moyen », « moyen bas », « bas » et des combinaisons de ce qui précède, où chaque classifieur correspond à une valeur numérique qui est utilisée dans une fonction objectif.

10. Système informatique (28) permettant d'effectuer un procédé pour créer un système de commande (200) pour un processus multivariable industriel (202) avec une ou plusieurs grandeurs réglantes (MV1, MV2, MV3, MV4, MV5) et une ou plusieurs grandeurs réglées (CV1, CV2, CV3, CV4, CV5), le procédé **caractérisé en ce qu'**il comprend :

l'affichage d'une première table (302) dans un dispositif d'interface utilisateur (300), où une ou plusieurs des grandeurs réglantes (MV1, MV2, MV3, MV4, MV5) sont affectables sélectivement à une pluralité de sous-systèmes de commande (200, 220, 230, 240, 250, 260, 270, 280), chaque grandeur réglante (MV1, MV2, MV3, MV4, MV5) étant affectable à un maximum d'un système de sous-commande (200, 220, 230, 240, 250, 260, 270, 280) ;

l'affichage d'une seconde table (304) dans le dispositif d'interface utilisateur (300), où une ou plusieurs des grandeurs réglées (CV1, CV2, CV3, CV4, CV5) sont affectables sélectivement à la pluralité de sous-systèmes de commande (200, 220, 230, 240, 250, 260, 270, 280) ;

la réception d'affectations d'une ou plusieurs des grandeurs réglantes (MV1, MV2, MV3, MV4, MV5) à un ou plusieurs sous-systèmes de commande de ladite pluralité de sous-systèmes de commande (200, 220, 230, 240, 250, 260, 270, 280) et d'une ou plusieurs des grandeurs réglées (CV1, CV2, CV3, CV4, CV5) à un ou plusieurs sous-systèmes de commande de ladite pluralité de sous-systèmes de commande (200, 220, 230, 240, 250, 260, 270, 280), les affectations étant reçues par l'intermédiaire du dispositif d'interface utilisateur (300) ;

l'utilisation des affectations reçues pour générer un ou plusieurs modèles de réponse de sous-processus ; et l'utilisation des un ou plusieurs modèles de réponse de sous-processus pour générer les un ou plusieurs sous-systèmes de commande (200, 220, 230, 240, 250, 260, 270, 280), qui permettent de commander un ou plusieurs sous-processus (202, 80, 90, 100, 110, 120, 130, 140), chaque système de sous-commande (200, 220, 230, 240, 250, 260, 270, 280) comprenant un ensemble de paramètres de réglage.

11. Système informatique (28) selon la revendication 10, dans lequel les un ou plusieurs sous-processus (202, 80, 90, 100, 110, 120, 130, 140) comprennent le processus multivariable industriel (202) même.

12. Système informatique (28) selon la revendication 10, dans lequel l'étape de génération des un ou plusieurs sous-systèmes de commande (200, 220, 230, 240, 250, 260, 270, 280) comprend la génération d'un système de sous-commande pour chaque sous-processus (202, 80, 90, 100, 110, 120, 130, 140) et l'association d'un ensemble de paramètres de réglage à chaque système de sous-commande (200, 220, 230, 240, 250, 260, 270, 280).

13. Système informatique (28) selon la revendication 10, dans lequel l'étape de réception d'affectations comprend la réception d'une affectation d'une première des grandeurs réglantes (MV1, MV2, MV3, MV4, MV5) à un premier des sous-systèmes de commande (200, 220, 230, 240, 250, 260, 270, 280), et dans lequel le procédé comprend en outre : la réception d'une affectation subséquente de la première des grandeurs réglantes (MV1, MV2, MV3, MV4, MV5) à un second des sous-systèmes de commande, et la désaffectation automatique de la première des grandeurs réglantes (MV1, MV2, MV3, MV4, MV5) du premier des sous-systèmes de commande (200, 220, 230, 240, 250, 260, 270, 280).

14. Système informatique (28) selon la revendication 10, dans lequel l'étape de génération des un ou plusieurs sous-systèmes de commande (200, 220, 230, 240, 250, 260, 270, 280) comprend en outre :

la création d'un ensemble de paramètres de réglage distinct pour chaque système de sous-commande (200, 220, 230, 240, 250, 260, 270, 280) pour chaque sous-processus (202, 80, 90, 100, 110, 120, 130, 140).

15. Système informatique selon la revendication 10, dans lequel chaque système de sous-commande qui s'est vu affecter au moins une grandeur réglante (MV1, MV2, MV3, MV4, MV5) et au moins une grandeur réglée (CV1, CV2, CV3, CV4, CV5) peut être commandé et est activé pour la commande, et dans lequel chaque système de sous-commande qui ne s'est pas vu affecter au moins une grandeur réglante (MV1, MV2, MV3, MV4, MV5) et au moins une grandeur réglée (CV1, CV2, CV3, CV4, CV5) ne peut pas être commandé et n'est pas activé pour la commande, et dans lequel le procédé comprend en outre :

le fait d'avoir au moins un système de sous-commande (200, 220, 230, 240, 250, 260, 270, 280) activé.

Fig. 1

Fig. 2

**Fig. 3**

EP 2 221 680 B1

**Fig. 4**

EP 2 221 680 B1

EP 2 221 680 B1

**130**

Dilution valves $u_1$
Slice screws $u_2$
Steambox nozzles $u_3$
Waterspray nozzles $u_4$

Sub-process 1
(Paper Machine)

$y_1$ Weight profile
$y_3$ Moisture 2 profile
$y_4$ Moisture 1 profile

**132**

**134**

**140**

Induction coils $u_5$

Sub-process 2
(Calender Stack)

$y_5$ Caliper profile

## Fig. 5

**Fig. 6**

## Subsystem 1

## Subsystem 2

**Fig. 7**

Fig. 8

EP 2 221 680 B1

## Subsystem 1

270

## Subsystem 2

280

**Fig. 9**

**300**

**306**

| | MV1 | MV2 | MV3 | MV4 | MV5 | | CV1 | CV2 | CV3 | CV4 | CV5 |
|---|---|---|---|---|---|---|---|---|---|---|---|
| Subsystem 0 | ● | ● | ● | ● | ● | | ☑ | ☑ | ☑ | ☑ | ☑ |
| Subsystem 1 | ○ | ○ | ○ | ○ | ○ | | ☐ | ☐ | ☐ | ☐ | ☐ |
| Subsystem 2 | ○ | ○ | ○ | ○ | ○ | | ☐ | ☐ | ☐ | ☐ | ☐ |
| Subsystem 3 | ○ | ○ | ○ | ○ | ○ | | ☐ | ☐ | ☐ | ☐ | ☐ |

**302** **304**

**Fig.10**

**300**

**316**

**318**

| | MV1 | MV2 | MV3 | MV4 | MV5 | | CV1 | CV2 | CV3 | CV4 | CV5 |
|---|---|---|---|---|---|---|---|---|---|---|---|
| Subsystem 0 | ○ | ○ | ○ | ○ | ○ | | ☐ | ☐ | ☐ | ☐ | ☐ |
| Subsystem 1 | ● | ● | ● | ○ | ○ | | ☑ | ☑ | ☑ | ☐ | ☐ |
| Subsystem 2 | ○ | ○ | ○ | ● | ● | | ☐ | ☐ | ☐ | ☑ | ☑ |
| Subsystem 3 | ○ | ○ | ○ | ○ | ○ | | ☐ | ☐ | ☐ | ☐ | ☐ |

**302** **304**

**Fig. 11**

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2432682 A